# EUROPEAN PATENT SPECIFICATION

(11) **EP 3 145 317 B1**
(45) Date of publication and mention of the grant of the patent: **14.08.2019**
(21) Application number: 15724586.1
(22) Date of filing: 15.05.2015
(51) Int. Cl.: A23D 9/00, A23D 9/02

(54) **FAT COMPOSITION**
FETTZUSAMMENSETZUNG
COMPOSITION DE GRAISSE

(30) Priority: 21.05.2014 EP 14169358
(43) Date of publication of application: 29.03.2017
(73) Proprietor: Bunge Loders Croklaan B.V., 1521 AZ Wormerveer (NL)
(72) Inventor: BHAGGAN, Krishnadath, NL-1521 AZ Wormerveer (NL); 'T ZAND, Imro, Taman Austin Johor Bahru 81100 (MY)
(74) Representative: Potter Clarkson
(86) International application number: PCT/EP2015/060787
(87) International publication number: WO 2015/177054

(56) References cited:
- EP-A1- 0 803 196
- WO-A1-2014/016257
- JP-A- 2008 228 610
- HIDETOSHI ISHIKAWA ET AL: "Polymorphic behavious of palm oil and modified palm oils", FOOD SCIENCE AND TECHNOLOGY INTERNATIONAL, TOKYO, NIHON-SHOKUHIN-KAGAKU-KÔGAKKAI, JP, vol. 3, no. 1, 1 January 1997 (1997-01-01) , pages 77-81, XP002716821, ISSN: 1341-7592, DOI: 10.3136/FSTI9596T9798.3.77

## Description

This invention relates to a fat composition, to a fat blend comprising the composition, and to confectionery products.

Triglyceride fats are used extensively in the confectionery industry. Many fats require a tempering step to convert the fat into the most stable crystalline form.

Chocolate is composed of triglycerides in unstable polymorphic crystal forms and has a tendency to undergo physical changes associated with the transitions of the unstable forms into a more stable form. These physical changes are likely to affect adversely the appearance and/or texture of the chocolate. Depending on the process conditions used, cocoa butter can be crystallized into different crystal forms, each of which possess a distinct melting point and density. The purpose of tempering is to produce sufficient, uniform seed crystals to ensure that the temper state is stable and that subsequent crystallisation of the whole of the chocolate mass occurs into the stable crystalline form. Properly tempered chocolate is important for qualities such as mould release (contraction), hardness, snap, mouthfeel, flavour release, gloss and resistance to fat bloom.

Similarly, some fats intended to replace cocoa butter in chocolate-like confectionery need to be tempered for the same reasons.

Crystallisation starters are frequently added to triglyceride fats in order to facilitate tempering of the fats. Modern Technology of Confectionery Industries with Formulae & Processes, Minni Jha, 2003, Asia Pacific Business Press Inc, 8178330997, page 208 describes crystallisation starters as being high melting triglycerides with a melting point of 55 °C to 70 °C, which, when included in a fat in a proportion of 2.5 to 3.0 % aid the tempering procedure. The crystallisation starter forms crystals as the fat is cooled from the molten state and these crystals allow the fat to be produced in the desired polymorphic crystal form.

EP-A-803196 discloses a hard butter additive composition comprising the middle melting point fraction of random interesterified palm stearin. The hard butter additive composition is used to prevent fat blooming and/or graining and improve mold removability of hard butter products such as chocolate or centre cream without a tempering process.

Our copending European patent application no 13275192.6 filed on 22 August 2013 relates to a fat composition that can be used as a crystallization starter and which comprises: greater than 70 % by weight palmitic acid; and from 2 to 12 % by weight P2O triglycerides (i.e., triglycerides having two palmitoyl groups and one oleoyl group, PPO and POP), wherein P is palmitic acid and O is oleic acid; wherein the fat composition has a weight ratio of SSO:SOS triglycerides of greater than 0.3, and wherein S is stearic or palmitic acid and O is oleic acid.

Our copending European patent application no 14275038.9 filed on 3 March 2014 relates to a fat composition that can be used as a crystallization starter comprising: greater than 75 % by weight palmitic acid and stearic acids; from 1 to 25 % by weight oleic acid; and greater than 20 % by weight of combined P₂St and PSt₂ triglycerides, wherein P is palmitic acid and St is stearic acid; wherein the fat composition has a weight ratio of P₂St:PPP triglycerides of greater than 0.5.

There remains a need for fat compositions that can be used as crystallization starters that can improve the crystallization of fat or fat blends in confectionery or bakery applications without adversely affecting the desirable properties of the fat or fat blends. There is also a need for crystallization starters that can provide an improvement in the sensory (i.e., organoleptic) properties of the fat or fat blends when used as part of a confectionery filling. In particular, there is a need for crystallization starters that are based on non-hydrogenated fats.

According to the present invention, there is provided a fat composition comprising:
greater than 70 % by weight palmitic acid;
greater than 50% by weight of the triglyceride PPP, wherein P is palmitic acid;
from greater than 12 % and up to 25 % by weight P2O triglycerides (i.e., triglycerides having two palmitoyl groups and one oleoyl group, PPO and POP), wherein P is palmitic acid and O is oleic acid; and
wherein the fat composition has a weight ratio of SSO:SOS triglycerides of greater than 0.3, and wherein S is stearic or palmitic acid and O is oleic acid.

Also provided by the invention is a fat blend comprising from 0.5 to 6 % by weight of the fat composition of the invention.

A further aspect of the invention is a process for making the fat composition of the invention comprising interesterifying a palm oil stearin having an iodine value (IV) of from 8 to 30.

Also provided by the invention in another aspect is a confectionery product comprising:
at least 20% by weight of the fat blend according to the invention; and
at least 30 % by weight sugar.

The invention also provides the use of a fat composition according to the invention to promote, enhance or accelerate the crystallization of fat or fat blends in confectionery or bakery applications.

The fat composition of the invention comprises greater than 70 % by weight palmitic acid. Most if not all of the palmitic acid is present in covalently bonded form in glycerides (i.e., triglycerides and any mono- and di-glycerides that might be present). Preferably, the fat composition of the invention comprises greater than 75 % by weight, more preferably from 75 % to 85 % by weight, of palmitic acid.

All percentages of fatty acids used herein refer to fatty acids bound as acyl groups in glycerides and are by weight based on total C8 to C24 fatty acids present in the fat composition as acyl groups in glycerides. The levels of fatty acids present in the compositions of the invention can be determined by methods well-known to those skilled in the art such as GC-FAME.

The term fatty acid, as used herein, refers to straight chain saturated or unsaturated (including mono-, di- and poly- unsaturated) carboxylic acids having from 8 to 24 carbon atoms. The term fat refers generally to compositions that contain a mixture of fatty acid glycerides.

The fat composition of the invention typically comprises more than 90 % by weight of triglycerides, more preferably at least 95 % by weight triglycerides.

The fat composition comprises greater than 12 % by weight up to 25 % by weight P2O triglycerides (i.e., triglycerides having two palmitoyl groups and one oleoyl group, PPO and POP), wherein P is palmitic acid and O is oleic acid. Preferably, the fat composition comprises from 13 to 25 %, more preferably from 14 to 22 %, even more preferably from 15 to 20 % by weight P2O triglycerides.

The fat composition has a weight ratio of SSO:SOS triglycerides of greater than 0.3, preferably greater than 0.5, even more preferably greater than 0.7, wherein S is stearic or palmitic acid and O is oleic acid. For example SSO includes PPO, PStO, StPO and StStO, where P is palmitic acid and St is stearic acid.

The fat composition of the invention is preferably an interesterified palm oil stearin, interesterification randomises the fatty acid residues in the glycerides. interesterification may be carried out, for example, chemically using catalysts, such as bases (e.g., sodium methoxide), or, preferably, enzymatically e.g., using a lipase such as from *Rhizopus oryzae* or *Thermomyces lanuginosus.* The palm oil stearin preferably has an iodine value (IV) of from 8 to 30, such as from 10 to 20. Iodine value may be determined by AOCS Cd 1 c-85.

The fat composition of the invention comprises greater than 50 % by weight of the triglyceride PPP, wherein P is palmitic acid, preferably greater than 53 % by weight, most preferably from 55 to 65 % by weight of PPP.

The fat composition preferably comprises less than 12 % by weight of stearic acid, more preferably less than 10 % by weight, most preferably from 3 to 8 % by weight of stearic acid.

The fat composition of the invention preferably comprises less than 15 % by weight of oleic acid, more preferably from 5 to 12 % by weight of oleic acid.

The saturated fatty acid (SAFA) content of the fat composition of the invention is preferably from 85 to 95 % based on fatty acids present.

The physical properties of fats are sometimes defined in terms of N values. These indicate the percentage of solid fat in the composition at a given temperature. Thus, the term Nx refers to solid fat content at a temperature of x °C, measured by NMR pulse techniques. Methods for determining N values are ISO method 8292-1 or AOCS Cd 16b-93. The fat compositions of the invention preferably have an N30 of greater than 80, more preferably greater than 85 and an N40 of from 65 to 80.

A preferred fat composition of the invention comprises:
from 75 to 85 % by weight palmitic acid;
from 3 to 10 % by weight of stearic acid; and
from 13 to 25 % by weight P2O triglycerides (i.e., triglycerides having two palmitoyl groups and one oleoyl group, PPO and POP), wherein P is palmitic acid and O is oleic acid;
wherein the fat composition has a weight ratio of SSO:SOS triglycerides of greater than 0.3, and wherein S is stearic or palmitic acid and O is oleic acid.

Another preferred fat composition of the invention comprises:
from 75 to 85 % by weight palmitic acid;
from 5 to 15 % by weight of oleic acid; and
from 14 to 22 % by weight P2O triglycerides (i.e., triglycerides having two palmitoyl groups and one oleoyl group, PPO and POP), wherein P is palmitic acid and O is oleic acid;
wherein the fat composition has a weight ratio of SSO:SOS triglycerides of greater than 0.3, and wherein S is stearic or palmitic acid and O is oleic acid.

A further preferred fat composition of the invention is an interesterified palm oil stearin having an iodine value (IV) of from 8 to 20, which comprises:
from 75 to 85 % by weight palmitic acid;
from 5 to 12 % by weight of oleic acid and/or from 3 to 12 % by weight of stearic acid; and
from 14 to 22 % by weight P2O triglycerides (i.e., triglycerides having two palmitoyl groups and one oleoyl group, PPO and POP), wherein P is palmitic acid and O is oleic acid;
wherein the fat composition has a weight ratio of SSO:SOS triglycerides of greater than 0.7, and wherein S is stearic or palmitic acid and O is oleic acid

The fat blend of the invention comprises from 0.5 to 6 % by weight of the fat composition of the invention, preferably from 1 to 5 % by weight, such as from 2 to 4 %, or from 2.5 to 3 %, together with one or more other fats as the balance of the fat blend.

The one or more other fats in the fat blend of the invention preferably include lauric fats and/or non-hydrogenated palm fractions.

The fat blend may comprise at least 80% by weight of a lauric fat component. The lauric fat component is preferably selected from the group consisting of coconut oil, palm kernel oil, fractions of coconut oil, fractions of palm kernel oil, and mixtures thereof.

In another embodiment, the fat blend comprises at least 30% by weight of one or more non-hydrogenated palm fractions. Preferably, the non-hydrogenated palm fraction comprises a palm olein, palm oil or a mixture thereof.

A preferred fat blend of the invention comprises:
(i) from 1 to 5 % by weight of an interesterified palm oil stearin having an iodine value (IV) of from 8 to 20, which comprises:
   from 75 to 85 % by weight palmitic acid;
   from 5 to 15 % by weight of oleic acid and/or from 3 to 12 % by weight of stearic acid; and
   from 14 to 22 % by weight P2O triglycerides (i.e., triglycerides having two palmitoyl groups and one oleoyl group, PPO and POP), wherein P is palmitic acid and O is oleic acid;
   wherein the fat composition has a weight ratio of SSO:SOS triglycerides of greater than 0.3, and wherein S is stearic or palmitic acid and O is oleic acid; and
(ii) from 95 to 99 % by weight of one or more other fats selected from lauric fats, non-hydrogenated palm fractions, palm oil, liquid oils and mixtures thereof.

Liquid oils include, for example, sunflower oil, rape seed oil, high oleic sunflower oil or a mixture of these oils.

The fat composition and fat blend of the invention are preferably of vegetable origin. Fats of vegetable origin are obtained directly or indirectly from vegetable sources. The vegetable fats are preferably refined. The term "refined", as used herein, refers to processes in which the purity of a fat is increased by a process which comprises at least the steps of bleaching, followed by filtering and deodorising (such as by steam refining). The fats are typically not hydrogenated.

Since vegetable fats do not contain significant amounts of cholesterol, the fat compositions and fat blends of the invention preferably contain less than 1%, more preferably less than 0.5%, by weight of cholesterol.

Also, since non-hydrogenated vegetable fats do not contain significant amounts of trans- fats, the fat compositions and fat blends of the invention preferably contain less than 1%, more preferably less than 0.5%, by weight of trans fatty acids.

The process for making the fat composition of the invention preferably comprises: (a) fractionating a palm oil to obtain a palm oil stearin having an iodine value (IV) of from 8 to 30; and (b) interesterifying the palm oil stearin thus obtained.

The fat composition of the invention may be used to promote, enhance or accelerate the crystallization of fat or fat blends in confectionery or bakery applications. In other words, the fat composition may be used as a crystallization starter.

Surprisingly, the fat composition of the invention has been found to have advantages in a confectionery product, such as providing an improvement in the sensory (i.e., organoleptic) properties of a confectionery filling, such as improved hardness and lower grittiness.

The fat composition and fat blend of the invention may be used in a confectionery product.

The confectionery product of the invention comprises at least 20% by weight of the fat blend according to the invention and at least 30 % by weight sugar.

The confectionery product produced according to the invention is typically a chocolate-like product and may, for example, be selected from bars, fillings, biscuit creams and confectionery coatings. Fillings are preferred. The confectionery products will preferably comprise one or more further ingredients such as skimmed milk powder, cocoa butter, nut based material (e.g., hazelnut pieces and/or hazelnut paste) and emulsifier (e.g., lecithin, PGPR, sorbitan tristearate or a mixture thereof). Further optional components include flavouring (e.g., vanilla, vanillin, mint, orange, etc), colourants and inclusions such as confectionery and fruit pieces.

The confectionery product of the invention comprises sugar. Sugars include, for example, sucrose, glucose, fructose and mixtures thereof. The sugar is typically sucrose. The sugar is preferably powdered. Preferably, the sugar is present in the confectionery product of the invention in an amount of from 30 to 70 % by weight, more preferably from 35 to 55 % by weight, even more preferably from 40 to 50 % by weight, based on the weight of the composition.

The confectionery product of the invention preferably comprises the fat blend in an amount of from 20 to 50 % by weight, such as from 25 to 40 % by weight.

Preferably, the confectionery product comprises at least 5% of milk powder, vegetable milk powder, dairy powder or a mixture thereof. A preferred confectionery product is a confectionery filling comprising at least 5% of a nut based material.

Lecithin is a preferred emulsifier and is preferably present in an amount of up to 1 % by weight of the confectionery product, such as from 0.1 to 1 % by weight.

The confectionery product may comprise cocoa powder, more preferably in an amount of up to 15 % by weight of the confectionery product, such as from 1 to 15 % by weight.

A preferred confectionery product of the invention comprises from 35 to 55 % by weight of sugar and from 25 to 50 % by weight of a fat blend which comprises:
(i) from 1 to 5 % by weight of an interesterified palm oil stearin having an IV of from 8 to 20, which comprises:
   from 75 to 85 % by weight palmitic acid;
   from 5 to 15 % by weight of oleic acid and/or from 3 to 12 % by weight of stearic acid; and
   from 14 to 22 % by weight P2O triglycerides (i.e., triglycerides having two palmitoyl groups and one oleoyl group, PPO and POP), wherein P is palmitic acid and O is oleic acid;
   wherein the fat composition has a weight ratio of SSO:SOS triglycerides of greater than 0.3, and wherein S is stearic or palmitic acid and O is oleic acid; and
(ii) from 95 to 99 % by weight of one or more other fats selected from lauric fats, non-hydrogenated palm fractions, palm oil, liquid oils and mixtures thereof.

It will be appreciated that the percentage amounts of all of the components in the compositions and products of the invention, including those not mentioned, will add up to 100 %.

Coatings may be applied to confectionery or to a bakery product. Confectionery includes ice cream. The confectionery products may also be used as coatings on products that are sold and/or consumed at ambient temperature (i.e., from 5 to 30 °C).

The confectionery products may be used to apply a partial or complete coating to a base product which is preferably a bakery product. Bakery products are typically baked in an oven. The bakery products are preferably made using flour. Examples of bakery products include biscuits, cookies, cakes, donuts and pastries. Cupcakes are particularly preferred examples of baked confectionery products for the invention.

Coated bakery products can be produced by melting the confectionery product (e.g., above 35 °C), applying it to an uncoated bakery product (e.g., by pouring it onto the uncoated bakery product or by immersing the uncoated bakery product in it) and lowering the temperature to solidify the confectionery product by allowing it to cool (or by forced cooling). Suitable methods are well-known to those skilled in the art.

The coated bakery products may be further decorated with ingredients that adhere to the coating such as icing and/or chocolate strands or chips or sugar strands (which can be of a single colour or multi-coloured).

Confectionery products may also be coated with a composition of the invention. Suitable confectionery products include chocolates, chocolate-like products and jellies.

Preferences and options for a given aspect, embodiment, feature or parameter of the invention should, unless the context indicates otherwise, be regarded as having been disclosed in combination with any and all preferences and options for all other aspects, embodiments, features and parameters of the invention. For example, the preferred features of the fat composition may be applied when the fat composition is used in the fat blend of the invention and the preferred features of the fat blend may be applied when the fat blend is used in the confectionery product.

The listing or discussion of an apparently prior-published document in this specification should not necessarily be taken as an acknowledgement that the document is part of the state of the art or is common general knowledge.

The following examples illustrate the invention and do not limit its scope in any way. In the examples and throughout this specification, all percentages, parts and ratios are by weight unless indicated otherwise.

### EXAMPLES

### Example 1

Palm oil stearin with an iodine value (IV) of about 14 (about 400 gram) was enzymatically interesterified using lipase from *Thermomyces lanuginosa* in a solvent-free system at 50°C to 75°C. The enzyme was filtered off to obtain the product.

The physical characteristics and analytical data of the interesterified palm oil stearin and h(PO)60 (fully hydrogenated palm oil) are given in the following table:

| Component | Example 1 (interesterified palm oil stearin) | H(PO)60 (reference) |
|---|---|---|
| US-N10 | 96.3 | 98.6 |
| US-N20 | 96.7 | 98.6 |
| US-N25 | 95.9 | 98.5 |
| US-N30 | 91.4 | 98.4 |
| US-N35 | 84.0 | 98.2 |
| US-N40 | 74.0 | 97.4 |
| MDP | 61.6 | 61.6 |
| C8:0 | 0.6 | |
| C10:0 | 0.0 | 0.0 |
| C12:0 | 0.1 | 0.7 |
| C15:0 | 1.3 | 0.1 |
| C14:0 | 0.1 | 1.4 |
| C16:0 | 80.5 | 58.2 |
| C17:0 | 0.1 | 0.1 |
| C18:0 | 5.0 | 38.7 |
| C18:1 | 9.8 | 0.1 |
| C18:2 | 2.1 | 0.0 |
| C20:0 | 0.3 | 0.5 |
| C24:0 | 0.1 | 0.1 |
| SAFA | 88.0 | 99.9 |
| MUFA | 9.8 | 0.1 |
| PUFA | 2.2 | 0.0 |
| IVFAME | 12.3 | 0.1 |

| GC triglyceride analysis | | |
|---|---|---|
| MPP | 3.1 | 2.0 |
| PPP | 58.2 | 26.3 |
| MOP | 0.9 | * |
| MLP | 0.1 | 0.2 |
| PPSt | 9.4 | 40.5 |
| POP | 17.0 | 0.1 |
| PLP | 3.8 | 0.0 |
| PStSt | 1.0 | 24.4 |
| POSt | 1.5 | 0.0 |
| POO | 1.8 | 0.0 |
| PLSt | 0.4 | 0.1 |
| PLO | 0.7 | 0.0 |
| StStSt | 0.1 | 5.6 |
| StOSt | 1.0 | 0.4 |
| TTrans | 0.1 | 0.0 |

| Silver phase data | | |
|---|---|---|
| SOS | 7.7 | |
| SOO | 1.5 | |
| OSO | 0.6 | |
| SSS | 66.8 | |
| SLS | 1.5 | |
| SSL | 3.6 | |
| SOL | 0.7 | |
| OOO | 0.1 | |
| SSO | 17.2 | |

| | | |
|---|---|---|
| US-Nx refers to solid fat content determined by NMR on unstabilised fat at x °C MDP is the Mettler dropping point Cx:y refers to a fatty acid having x carbon atoms and y double bonds; levels determined by GC-FAME Ttrans means total trans Triglyceride composition MPP, etc, was determined by GC (ISO 23275) and includes triglycerides having the same fatty acids in different positions e.g., MPP includes MPP and PMP IVFAME refers to calculated iodine value M, O, P, Stand L refer to myristic, oleic, palmitic, stearic and linoleic acids, respectively | | |

The properties of the fat composition of Example 1 are summarized in the following table:

| C16:0 (measured by GC FAME) | PPP measured by GC (ISO 23275) (P is palmitic acid) | P2O measured by GC (ISO 23275) (P is palmitic acid and O is oleic acid) | SOS measured by silver phase (S is saturated fatty acids and O is oleic acid) | SSO measured by silver phase (S is saturated fatty acids and O is oleic acid) |
|---|---|---|---|---|
| 80.5 | 58.2 | 17.0 | 7.7 | 17.2 |

| | | | | |
|---|---|---|---|---|
| P2O means combined POP and PPO | | | | |

### Example 2

Fat blend 1 (blend of palm oil/palm olein) suitable as filling fat contains 1 % by weight of h(PO)60 (fully hydrogenated palm oil). Fat blends 2 and 3 contain the non-hydrogenated hard fat components palm oil stearin IV 14 and the enzymatically interesterified palm oil stearin of Example 1.

### 1. Physical analysis

**Table 1 Physical analysis of fats**

| | Fat blend 1 | Fat blend 2 | Fat blend 3 |
|---|---|---|---|
| Palm mid-fraction IV 45 | 74 | 74 | 74 |
| Palm olein fraction | 25 | 25 | 25 |
| Palm oil stearin IV 14 | | 1 | |
| Example 1 | | | 1 |
| h(PO)60 | 1 | | |
| SMP (°C) | 30.4 | 29.0 | 30.0 |
| | | | |

| Solid Fat Content Method 2.150(b) - S20 | | | |
|---|---|---|---|
| N10 | 62.89 | 61.44 | 61.22 |
| N20 | 42.87 | 41.20 | 44.13 |
| N25 | 24.01 | 22.60 | 23.21 |
| N30 | 4.02 | 3.98 | 3.07 |
| N35 | 0.21 | 0.00 | 0.01 |

### 2. Formulation

Three filling formulations were prepared containing Fat blends 1 to 3 according to the recipe provided in Table 2.

**Table 2 Formulation of filling used in the study**

| **Ingredients** | **%** |
|---|---|
| Fat | 30.0 |
| Cocoa Mass | 8.0 |
| Sugar | 34.0 |
| Cocoa Powder | 7.0 |
| Skim Milk Powder | 13.0 |
| Maltodextrin | 8.0 |
| Lecithin | 0.4 |

The fillings were prepared as in Table 2 and were fully melted, then cooled to 22-24 °C before depositing into packaging for further analysis.

The sensory evaluation was conducted on aged samples (after 4 months aging at 20 °C). The filling made with the fat of Example 1 shows positive results in all evaluated attributes.

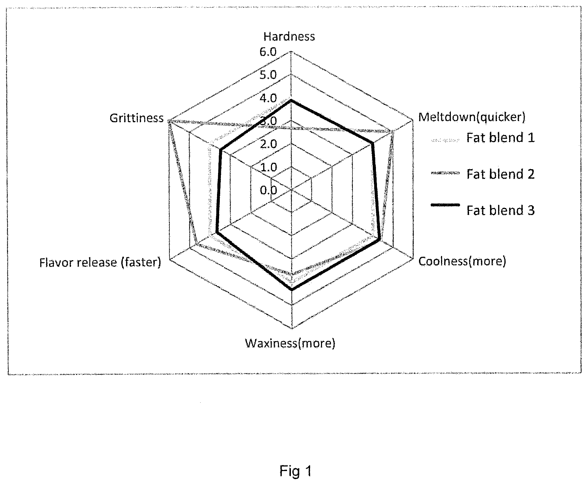

Figure 1 shows the result of sensory evaluation of different blend of fillings.

## Claims

1. A fat composition comprising:
greater than 70 % by weight palmitic acid;
from greater than 12 up to 25 % by weight P2O triglycerides, wherein P is palmitic acid and O is oleic acid; and
greater than 50% by weight of the triglyceride PPP, wherein P is palmitic acid;
wherein the fat composition has a weight ratio of SSO:SOS triglycerides of greater than 0.3, and wherein S is stearic or palmitic acid and O is oleic acid.

2. Fat composition as claimed in Claim 1 comprising greater than 53 % by weight, most preferably from 55 to 65 % by weight of PPP.

3. Fat composition as claimed in Claim 1 or Claim 2 comprising less than 12 % by weight of stearic acid, more preferably less than 10 % by weight, most preferably from 3 to 8 % by weight.

4. Fat composition as claimed in any one of the preceding claims comprising less than 15 % by weight of oleic acid.

5. Fat composition as claimed in any one of the preceding claims which is an interesterified palm oil stearin having an iodine value of from 8 to 30, preferably from 10 to 20.

6. A fat blend comprising from 0.5 to 6 % by weight of the fat composition of any one of Claims 1 to 5 and from 94 to 99.5 % by weight of one or more other fats.

7. Fat blend as claimed in Claim 6 comprising at least 80% by weight of a lauric fat component.

8. Fat blend as claimed in Claim 7, wherein the lauric fat component is selected from the group consisting of coconut oil, palm kernel oil, fractions of coconut oil, fractions of palm kernel oil, and mixtures thereof.

9. Fat blend as claimed in Claim 6 comprising at least 30% by weight of one or more non-hydrogenated palm fractions.

10. Fat blend as claimed in Claim 9, wherein the non-hydrogenated palm fraction comprises a palm olein.

11. A process for making the fat composition of any one of Claims 1 to 5 which comprises interesterifying a palm oil stearin having an iodine value (IV) of from 8 to 30.

12. A confectionery product comprising:
at least 20% by weight of the fat blend according to any one of Claims 6 to 10; and
at least 30 % by weight sugar.

13. Confectionery product as claimed in Claim 12 comprising at least 5% of milk powder, vegetable milk powder, dairy powder or a mixture thereof.

14. Confectionery product as claimed in Claim 12 or Claim 13 which is a confectionery filling comprising at least 5% of a nut based material.

15. Use of a fat composition according to any one of Claims 1 to 5 to promote, enhance or accelerate the crystallization of fat or fat blends in confectionery or bakery applications.

## Patentansprüche

1. Fettzusammensetzung, die Folgendes umfasst:
über 70 Gew.-% Palmitinsäure;
von über 12 bis zu 25 Gew.-% P2O-Triglyceride, wobei P Palmitinsäure und O Ölsäure ist; und
über 50 Gew.-% des Triglycerid-PPP, wobei P Palmitinsäure ist;
wobei die Fettzusammensetzung ein Gewichtsverhältnis von SSO-:SOS-Triglyceriden von über 0,3 aufweist, und wobei S Stearin- oder Palmitinsäure und O Ölsäure ist.

2. Fettzusammensetzung nach Anspruch 1, die über 53 Gew.-%, am stärksten bevorzugt von 55 bis 65 Gew.-% PPP umfasst.

3. Fettzusammensetzung nach Anspruch 1 oder 2, die weniger als 12 Gew.-% Stearinsäure, stärker bevorzugt weniger als 10 Gew.-%, am stärksten bevorzugt von 3 bis 8 Gew.-%, umfasst.

4. Fettzusammensetzung nach einem der vorhergehenden Ansprüche, die weniger als 15 Gew.-% Ölsäure umfasst.

5. Fettzusammensetzung nach einem der vorhergehenden Ansprüche, die ein umgeestertes Palmölstearin ist, das eine lodzahl von 8 bis 30, bevorzugt von 10 bis 20, aufweist.

6. Fettmischung, die von 0,5 bis 6 Gew.-% der Fettzusammensetzung nach einem der Ansprüche 1 bis 5 und von 94 bis 99,5 Gew.-% eines oder mehrerer anderer Fette umfasst.

7. Fettmischung nach Anspruch 6, die wenigstens 80 Gew.-% einer Laurinfettkomponente umfasst.

8. Fettmischung nach Anspruch 7, wobei die Laurinfettkomponente aus der Gruppe, bestehend aus Kokosöl, Palmkernöl, Fraktionen von Kokosöl, Fraktionen von Palmkernöl und Gemischen davon, ausgewählt ist.

9. Fettmischung nach Anspruch 6, die wenigstens 30 Gew.-% einer oder mehrerer ungehärteter Palmfraktionen umfasst.

10. Fettmischung nach Anspruch 9, wobei die ungehärtete Palmfraktion ein Palmolein umfasst.

11. Vorgang zum Herstellen der Fettzusammensetzung nach einem der Ansprüche 1 bis 5, der ein Umestern eines Palmölstearins, das eine lodzahl (*iodine value* - IV) von 8 bis 30 aufweist, umfasst.

12. Süßwarenprodukt, das Folgendes umfasst:
wenigstens 20 Gew.-% der Fettmischung nach einem der Ansprüche 6 bis 10; und
wenigstens 30 Gew.-% Zucker.

13. Süßwarenprodukt nach Anspruch 12, das wenigstens 5 Gew.-% Milchpulver, pflanzliches Milchpulver, Molkereipulver oder eines Gemisches davon umfasst.

14. Süßwarenprodukt nach Anspruch 12 oder 13, das eine Süßwarenfüllung ist, die wenigstens 5 % eines Materials auf Nussbasis umfasst.

15. Verwendung einer Fettzusammensetzung nach einem der Ansprüche 1 bis 5, um die Kristallisation von Fett oder Fettmischungen in Süßwaren- oder Backanwendungen zu fördern, zu steigern oder zu beschleunigen.

## Revendications

1. Composition de graisse comprenant :
plus de 70 % en poids d'acide palmitique ;
plus de 12 à 25 % en poids de triglycérides de P2O, dans laquelle P est l'acide palmitique et O est l'acide oléique ; et
plus de 50 % en poids du triglycéride PPP, dans laquelle P est l'acide palmitique ;
la composition de graisse ayant un rapport en poids de triglycérides SSO:SOS supérieur à 0,3, et S étant l'acide stéarique ou palmitique et O étant l'acide oléique.

2. Composition de graisse selon la revendication 1, comprenant plus de 53 % en poids, de préférence de 55 à 65 % en poids de PPP.

3. Composition de graisse selon la revendication 1 ou 2, comprenant moins de 12 % en poids d'acide stéarique, de préférence moins de 10 % en poids, plus préférablement de 3 à 8 % en poids.

4. Composition de graisse selon l'une quelconque des revendications précédentes comprenant moins de 15 % en poids d'acide oléique.

5. Composition de graisse selon l'une quelconque des revendications précédentes, qui est une stéarine d'huile de palme interestérifiée présentant un indice d'iode de 8 à 30, de préférence de 10 à 20.

6. Mélange de graisses comprenant 0,5 à 6 % en poids de la composition de graisse selon l'une quelconque des revendications 1 à 5 et 94 à 99,5 % en poids d'une ou de plusieurs autres graisses.

7. Mélange de graisses selon la revendication 6, comprenant au moins 80 % en poids d'un composant de graisse laurique.

8. Mélange de graisses selon la revendication 7, dans lequel le composant de graisse laurique est choisi dans le groupe constitué par l'huile de noix de coco, l'huile de palmiste, les fractions d'huile de noix de coco, les fractions d'huile de palmiste et des mélanges de celles-ci.

9. Mélange de graisses selon la revendication 6, comprenant au moins 30 % en poids d'une ou de plusieurs fractions de palme non hydrogénées.

10. Mélange de graisses selon la revendication 9, dans lequel la fraction de palme non hydrogénée comprend une oléine de palme.

11. Procédé de préparation de la composition de graisse selon l'une quelconque des revendications 1 à 5, qui comprend l'interestérification d'une stéarine d'huile de palme présentant un indice d'iode (IV) compris entre 8 et 30.

12. Produit de confiserie comprenant :
au moins 20 % en poids du mélange de graisses selon l'une quelconque des revendications 6 à 10 ; et
au moins 30 % en poids de sucre.

13. Produit de confiserie selon la revendication 12, comprenant au moins 5 % de lait en poudre, de lait en poudre végétal, de poudre laitière ou d'un mélange de ceux-ci.

14. Produit de confiserie selon la revendication 12 ou 13, qui est une garniture de confiserie comprenant au moins 5 % d'un matériau à base de noix.

15. Utilisation d'une composition de graisse selon l'une quelconque des revendications 1 à 5 pour favoriser, améliorer ou accélérer la cristallisation de graisses ou de mélanges de graisses dans des applications de confiserie ou de boulangerie.
